# EUROPEAN PATENT SPECIFICATION

(11) **EP 1 997 218 B1**
(45) Date of publication and mention of the grant of the patent: **27.10.2010**
(21) Application number: 07722729.6
(22) Date of filing: 08.03.2007
(51) Int. Cl.: H02N 2/00, H01L 41/08

(54) **SELF-SENSING ACTUATOR AND METHOD OF CONTROLLING THEREOF**
SELBSTMESSENDES STELLGLIED UND VERFAHREN ZU SEINER STEUERUNG
ACTIONNEUR À AUTO-DÉTECTION ET SON PROCÉDÉ DE COMMANDE

(30) Priority: 08.03.2006 EE 200600005
(43) Date of publication of application: 03.12.2008
(73) Proprietor: University of Tartu, 50090 Tartu (EE)
(72) Inventor: AABLOO, Alvo, EE-51009 Tartu (EE); KRUUSMAA, Maarja, EE-11613 Tallinn (EE); PUNNING, Andres, EE-50708 Tartu (EE)
(74) Representative: Koppel, Mart Enn
(86) International application number: PCT/EE2007/000004
(87) International publication number: WO 2007/101448

(56) References cited:
- US-A1- 2002 039 620
- BONOMO ET AL: "A method to characterize the deformation of an IPMC sensing membrane" SENSORS AND ACTUATORS A, ELSEVIER SEQUOIA S.A., LAUSANNE, CH, vol. 123-124, 23 September 2005 (2005-09-23), pages 146-154, XP005073454 ISSN: 0924-4247
- POURBOCHRAT F ET AL: "Vibration control of flexible beams using self-sensing actuators" WORLD AUTOMATION CONGRESS, 2002. PROCEEDINGS OF THE 5TH BIANNUAL JUNE 9-13, 2002, PISCATAWAY, NJ, USA,IEEE, vol. 14, 9 June 2002 (2002-06-09), pages 133-140, XP010616487 ISBN: 1-889335-18-5
- PUNNING ANDRES ET AL: "Empirical model of a bending IPMC actuator" PROC SPIE INT SOC OPT ENG; PROCEEDINGS OF SPIE - THE INTERNATIONAL SOCIETY FOR OPTICAL ENGINEERING; SMART STRUCTURES AND MATERIALS 2006: ELECTROACTIVE POLYMER ACTUATORS AND DEVICES (EAPAD); SAN DIEGO, CA, USA, FEB 27-MAR 2, 2006, vol. 6168, 2006, pages 61681V-1-61681V-8, XP002442092
- PUNNING A ET AL: "A self-sensing ion conducting polymer metal composite (IPMC) actuator" SENSORS AND ACTUATORS A (PHYSICAL) ELSEVIER SWITZERLAND, vol. 136, no. 2, 16 May 2007 (2007-05-16), pages 656-664, XP002442093 ISSN: 0924-4247

## Description

### Background of the invention

### Technical field

The invention belongs to the field of actuators and sensors comprising electroactive polymers (EAP), such as ionic polymer-metal composites (IPMC), and specifically to the field of self-sensing actuators.

The main area of application of the invention is the use of self-sensing actuators in equipment that uses the artificial muscles as actuators and requires feedback on the mechanical position of the actuators in space at each moment in time. The immediate area of application of the invention is in autonomous and semi-autonomous equipment that uses electroactive polymers as actuators.

### Background art

Known are IPMC actuators with external sensors. The operating principles and geometric solutions of potential applications of actuators based on IPMC are described in US6109852 (B25J 15/00, University of New Mexico, 2000).

Known are several geometric solutions for building sensors that use IPMC, and descriptions of electrical methods for application of both actuators and sensors (US6475639, B32B 15/08, Mohsen Shahinpoor, 2002), as well as the use of electroactive polymers as touch sensors and various geometric solutions for that purpose (US6809462, H02N 2/00, SRI International, 2004).

Also known are methods and solutions for building touch sensors of such materials and their areas applications mainly in tactile equipment (US6940211, H01L 41/08, SRI International, 2005).

C. Bonomo et al.: "A method to characterize the deformation of an IPMC sensing membrane", SENSORS AND ACTUATORS A, vol. 123-124,23 September 2005, page 146, discloses a self-sensing actuator made of electroactive polymer material comprising a movable part and a rigidly fixed part, a control signal contact pair and an actuator position sensor. This is considered as closest prior art.

A major disadvantage of the known solutions is that the actuators made of the IPMC material require external sensors to monitor the movement of actuators and use this information for controlling the actuators on the basis of feedback. The known solutions use external sensors to transmit this information to the control system.

### Disclosure of the invention

The objective of the invention is a self-sensing actuator that functions simultaneously both as an actuator and a position sensor. This property allows construction of devices requiring feedback on the position of the actuator and this property enables more precise control of the actuator without external sensors.

Suitable materials for designing such actuators include materials that have a property of changing their shape (e.g., linear dimensions, or curvature) in an electric field, such as electroactive polymers (EAP), including ionic-polymer metal composites (IPMC).

This objective is achieved according to the present invention as claimed in claim 1, by including in the self-sensing actuator, which consists of a moveable part and a control signal contact pair, an additional rigidly fixed part and at least two sensor signal contact pairs, with at least one of the sensor signal contact pair on the rigidly fixed part, to achieve the self-sensing property.

A method for controlling the shape of such actuator is defined in claim 8. Rigidly fixing at least one area of the self-sensing actuator with at least three attached contact pairs enables simultaneous control of the actuator and measurement of electrical signals that characterise the mechanical change of shape (e.g,, change of length, or change of curvature) of the actuator and the rate of change of shape, whereas the additional sensor signal contact pair and control signal contact pair are located on the rigidly fixed part.

Both the moveable and rigidly fixed parts of the self-sensing actuator could be divided into several electrically separated sections or several partially electrically separated sections. Each section can have an additional contact or a pair of contacts attached to it. This would permit to get more accurate data about the change of shape of the actuator as the position of each part can be determined separately.

A moveable part (or several sections of the moveable part) can have more than one contact pairs attached to it, allowing for more accurate positioning of the actuator as the electric properties are measured in more than one point.

The information required by the sensor is measured on at least two contact pairs, with at least one of the contact pairs being attached to the rigidly fixed part of the invention and at least one to the moveable part. The self-sensing property is based on the difference between the signals measured at these contact pairs.

The operation of the invention is based on the notion that during bending of the actuator, made of IPMC, the different surfaces of the actuator acquire different electrical properties. Measuring these differences enables to separate the information that includes additional sensor information. The change of electrical properties is based on different curvature radii of the contact surfaces, which generates different electrical properties on different surfaces.

### Brief description of the drawings

Fig. 1 is a side view of an embodiment of the self-sensing actuator;
Fig. 2 is another view of the self-sensing actuator as depicted in Fig. 1;
Fig. 3 is another embodiment of the self-sensing actuator, wherein both moveable and fixed parts are on the same side in relation to control contacts;
Fig. 4 is another embodiment of the self-sensing actuator, wherein both the moveable and fixed parts are split through removal of the conducting surface layer;
Fig. 5 is another embodiment of the self-sensing actuator, wherein both the moveable and fixed parts are split through removal of the conducting surface layer, but connection has been retained in the section farthest from the contacts;
Fig. 6 is a block scheme of a system for carrying out the invention; and
Fig. 7 depicts signals applied to the control signal contact pair and received from the sensor signal contact pairs, caused by the voltage impulse

### Modes for carrying out the invention

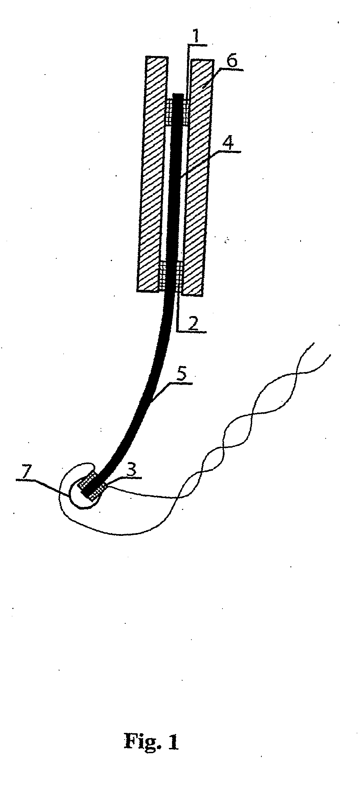

Fig. 1 depicts a side view of one embodiment of the self-sensing actuator. A control signal contact pair 2 is attached to the IPMC material to control the actuator. A sensor signal contact pair 1 is located on the rigidly fixed part 4 of the actuator. Rigidity of the area 4 between contact pairs 1 and 2 is provided by a retainer 6. A part 5 of the self-sensing actuator is moveable (e.g., can bend or change its shape) and performs the functions of the actuator. A sensor signal contact pair 3 is attached to the moveable part 5 with a clamp 7.

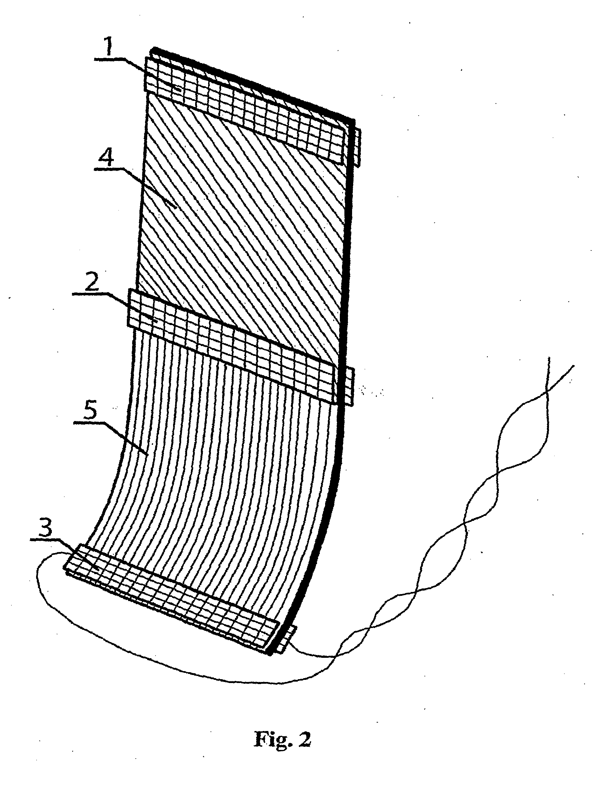

Fig. 2 is another view of the same embodiment (with retainers 6 and 7 omitted to provide better look to the rigidly fixed part 4). The control signal contact pair 2 is attached to the IPMC material. The sensor signal contact pair 1 is located on the rigidly fixed part 4 of the actuator and the sensor signal contact pair 3 is attached to the moveable part 5 of the actuator. The information required to perform the self-sensing function is obtained by comparing the electrical signals measured on the sensor signal contact pairs 1 and 3.

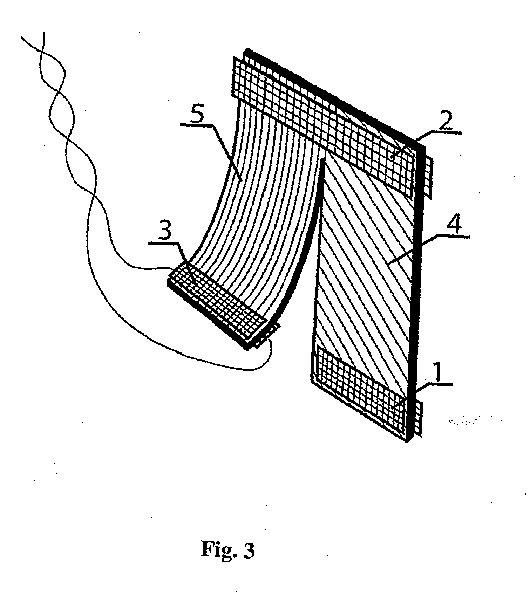

Fig. 3 depicts another embodiment, where the moveable part 5 and rigidly fixed part 4 are positioned next to each other, at the same side from the control signal contact pair 2.

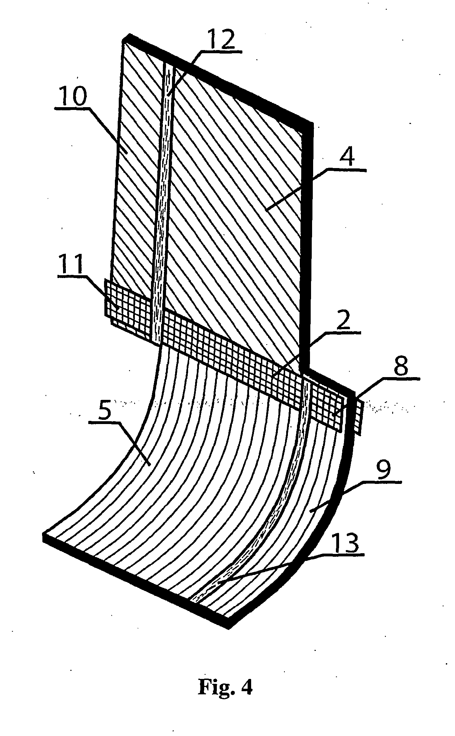

Fig. 4 depicts another embodiment of the self-sensing actuator, where the rigidly fixed part 4 is split in two, with a separated section 10, which is separated from the rest of the rigidly fixed part 4 by section 12. Section 12 is created by removing the conductive layer from the surface of the IPMC material.

The moveable part 5 of the actuator is split in a similar manner, with a separated section 9. Section 9 is separated from the rest of the moveable part 5 by IPMC section 13, which has no conductive surface layer.

The control signal of the actuator is transmitted to contact pair 2 and the sensor signals are measured at contact 11 for the rigidly fixed part 4 and at contact 8 for the moveable part 5.

The information describing the self-sensing function is obtained through comparison of the electrical signals measured at contacts 11 and 8.

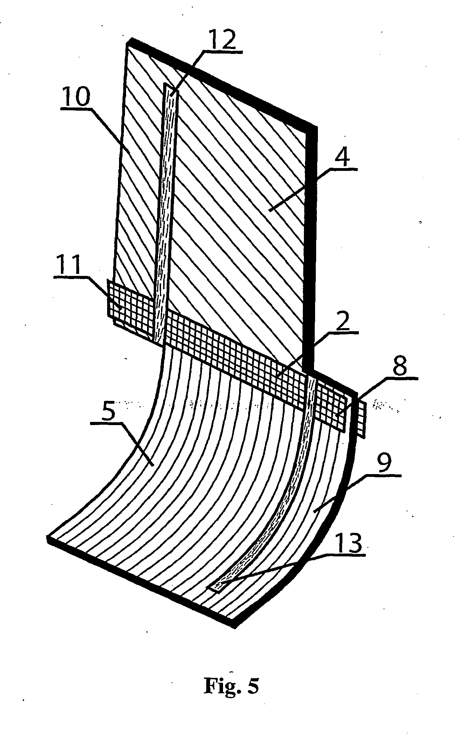

Fig. 5 depicts another embodiment of a self-sensing actuator that differs from the embodiment in Fig. 4 in that the section 12 without the conductive surface layer does not separates the section 10 from the rest of the rigidly fixed part 4 in entire extent of section 10, but electrical connection still exists on the edge of the actuator farthest from the contact 11 and contact pair 2. A similar solution is used on section 13 that separates the section 9 from the rest of the moveable part 5.

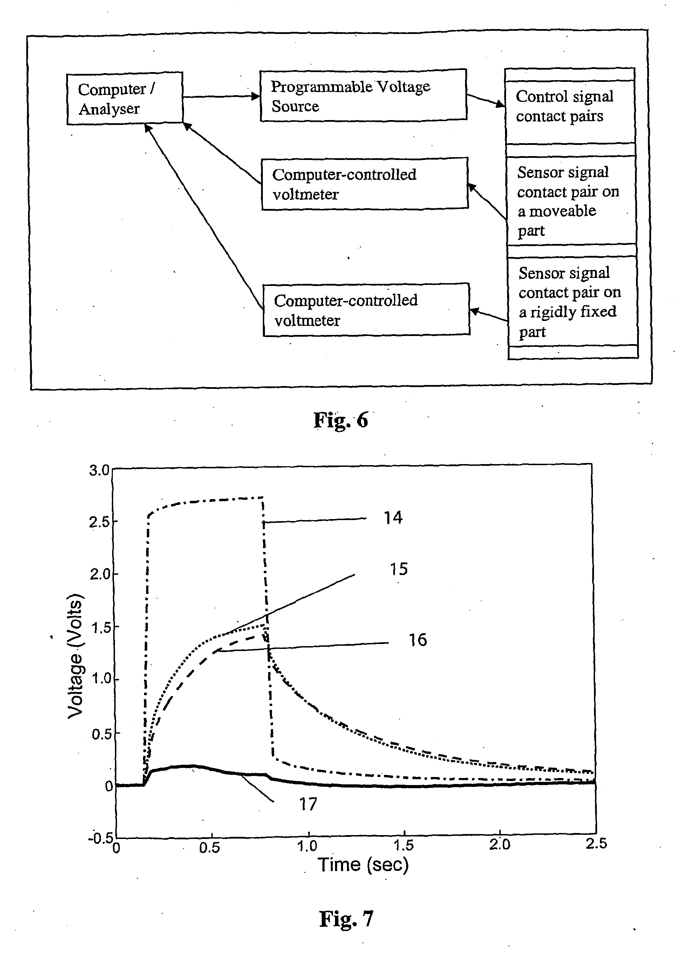

Fig. 6 depicts a mode for carrying out the invention. The control signal contact pair of the self-sensing actuator that corresponds to the one pictured on Fig. 2 is connected to a programmable voltage source, which is in turn controlled from a computer/analyser. The sensor signal contact pair of the self-sensing actuator is connected to a computer-controlled voltmeter. Similarly, the sensor signal contact pair of the rigidly fixed part of the actuator is connected to another voltmeter.

The computer/analyser reads the readings of the voltmeters, analyses them and controls the programmable voltage source accordingly. This is a device operating on the basis of the feedback principle, adjusting the control signal according to the difference between the signals measured on the sensor signal contact pairs.

During the experiment, the control signal was generated by the National Instruments PCI-6703 DAQ interface, amplified by the NS LM 675 amplifier and applied on the control signal contact pair 2. The contact pairs were made of narrow gold plates weighing 210-270 milligrams and connected to the measurement and control system with 0.05 mm wires. The signals from the sensor signal contact pairs 1 and 3 were measured using the National Instruments PCI-6034 DAQ interface with a SCC RTD01 module.

Fig. 7 depicts a voltage impulse 14 transmitted to the control signal contact pair 2. Signal 15 is measured at the sensor contact pair 1 and signal 16 is measured at the sensor contact pair 3. The operation of the self-sensing actuator is based on the difference 17 between these sensor signals measured from contact pairs 1 and 3.

During the experiment, the self-sensing actuator with a total length of 6 cm moved freely without additional load within a maximum amplitude of 3 cm. The length of the rigidly fixed part was 2 cm and the moveable part was 4 cm long.

The developed self-sensing actuator is capable of operating simultaneously as an actuator and position sensor without any external sensors, which allows using the invention in various types of equipment that use so-called artificial muscles as actuators and require feedback on the position of actuators in time. Self-sensing actuators may be also used in robotics where the actuator is able to give feedback of its own position and detect collisions. The sensor properties can be used instead of position and acceleration sensors, but also s sensors for collision detection.

One potential application is haptic devices, where the self-sensing actuator can be used for force feedback. Another application is smart textiles (fabrics), where the self-sensing properties can be used to detect impact. Yet another application is to use the self-sensing actuator for minimal invasive surgery devices, where the self-sensing actuator can be used to guide the end of the effector (or be that effector itself) as well as detect impact and give feedback of the end-effectors position.

The exemplary embodiments presented herein illustrate the principles of the invention and are not intended to be exhaustive or to limit the invention to the form disclosed; it is intended that the scope of the invention be defined by the claims appended hereto.

## Claims

1. Self-sensing actuator (1) made of electroactive polymer material, the actuator comprising a rigidly fixed part (4) and a movable part (5) connected to said rigidly fixed part (4) and a control signal contact pair (2), attached to said moveable part, (5) **characterised by** a first sensor signal contact pair (3) on said moveable part and a second sensor signal contact pair (1) on said rigidly fixed part (4), wherein the shape change of said moveable part (5) during operation of the self-sensing actuator (1) is determined by the difference of the signals at said first sensor signal contact pair (3) and said second sensor signal contact pair (1).

2. Self-sensing actuator as in claim 1, **characterised in that** the rigidly fixed part (4) is located between an additional sensor signal contact pair (3) and said control signal contact pair (2).

3. Self-sensing actuator according to claim 1, **characterised in that** the moveable part (5) is divided into at least two electrically separated sections.

4. Self-sensing actuator according to claims **1** to 3, **characterised in that** the rigidly fixed part (4) is divided into at least two electrically separated sections.

5. Self-sensing actuator according to claim 1, **characterised in that** the moveable part (5) is divided into at least two sections, partially separated by non-conductive area (13).

6. Self-sensing actuator according to claims 1, 2 and 5, **characterised in that** both the moveable part and the rigidly fixed part is divided into at least two sections, partially separated by non-conductive area (12, 13).

7. Self-sensing actuator according to claims 1 to 6, **characterized in that** said electroactive polymer material is an ionic polymer-metal composite material.

8. A method for controlling the shape of an actuator, comprising an electroactive polymer material, the method comprising applying a control voltage impulse on said actuator, **characterized by** rigidly fixing at least one part of the actuator and measuring a first response signal to said voltage impulse at a rigidly fixed part of the actuator and measuring a second response signal to said voltage impulse at a moveable part of the actuator, and calculating the shape of the moveable part from the difference between said first response signal and said second response signal.

## Patentansprüche

1. Selbstabtastender Aktor (1), hergestellt aus elektroaktivem Polymermaterial, der Aktor besteht aus einem starr fixierten Teil (4) und einem beweglichen Teil (5), der mit dem besagten starr fixierten Teil (4) und mit dem Kontrollsignal-Kontaktpaar (2) verbunden ist, befestigt an dem besagten beweglichen Teil, (5) **gekennzeichnet durch** das erste Gebersignal-Kontaktpaar (3) an dem besagten beweglichen Teil und **durch** das zweite Gebersignal-Kontaktpaar (1) an dem besagten starr fixierten Teil (4), wo die Formänderung des besagten beweglichen Teils (5) während des Betriebs des selbstabtastender Aktors (1) **durch** die Differenz der Signale an dem besagten ersten Gebersignal-Kontaktpaar (3) und an dem besagten zweiten Gebersignal-Kontaktpaar (1) **gekennzeichnet** ist.

2. Selbstabtastender Aktor nach Anspruch 1, **dadurch gekennzeichnet, dass** sich der starr fixierte Teil (4) zwischen dem zusätzlichen Gebersignal-Kontaktpaar (3) und dem besagten Kontrollsignal-Kontaktpaar (2) befindet.

3. Selbstabtastender Aktor nach Anspruch 1, **dadurch gekennzeichnet, dass** der bewegliche Teil (5) in mindestens zwei elektrisch getrennte Sektionen geteilt ist.

4. Selbstabtastender Aktor nach den Ansprüchen 1 bis 3, **dadurch gekennzeichnet, dass** der starr fixierte Teil (4) in mindestens zwei elektrisch getrennte Sektionen geteilt ist.

5. Selbstabtastender Aktor nach Anspruch 1, **dadurch gekennzeichnet, dass** der bewegliche Teil (5) in mindestens zwei Sektionen geteilt ist, die teilweise durch einen nichtleitenden Bereich (13) getrennt sind.

6. Selbstabtastender Aktor nach den Ansprüchen 1, 2 und 5, **dadurch gekennzeichnet, dass** sowohl der bewegliche Teil als auch der starr fixierte Teil in mindestens zwei Sektionen geteilt sind, die teilweise durch einen nichtleitenden Bereich (12, 13) getrennt sind.

7. Selbstabtastender Aktor nach den Ansprüchen 1 bis 6, **dadurch gekennzeichnet, dass** das besagte elektroaktive Polymermaterial ein ionisches Polymer-Metall-Verbundmaterial ist.

8. Ein Verfahren zum Kontrollieren der Form des Aktors, bestehend aus elektroaktivem Polymermaterial, das Verfahren umfasst die Anwendung des Kontroll-Spannungsimpulses auf den besagten Aktor, **gekennzeichnet durch** starre Fixierung von mindestens einem Teil des Aktors und **durch** Messung des ersten Antwortsignals auf den besagten Spannungsimpuls am starr fixierten Teil des Aktors und Messung des zweiten Antwortsignals auf den besagten Spannungsimpuls am beweglichen Teil des Aktors und Berechnung der Form des beweglichen Teils aufgrund der Differenz zwischen dem besagten ersten Antwortsignal und dem besagten zweiten Antwortsignal.

## Revendications

1. Un actionneur auto-détectant (1) composé de matériau polymère électroactif, l'actionneur comprenant une partie fixée de manière rigide (4) et une partie mobile (5) connectée à ladite partie fixée de manière rigide (4) et une paire de contacts de signal de contrôle (2), attachée à ladite partie mobile, (5) **caractérisé par** une première paire de contacts de signal de contrôle (3) sur ladite partie mobile et une seconde paire de contacts de signal de contrôle (1) sur ladite partie fixée de manière rigide (4), où la modification de la forme de ladite partie mobile (5) durant le fonctionnement de l'actionneur auto-détectant (1) est déterminée par la différence entre les signaux à ladite première paire de contacts de signal de contrôle (3) et ladite seconde paire de contacts de signal de contrôle (1).

2. Un actionneur auto-détectant selon la revendication 1, **caractérisé en ce que** la partie fixée de manière rigide (4) est située entre une paire additionnelle de contacts de signal du capteur (3) et ladite paire de contacts de signal de contrôle (2).

3. Un actionneur auto-détectant selon la revendication 1, **caractérisé en ce que** la partie mobile (5) est divisée au moins en deux sections électriques séparées.

4. Un actionneur auto-détectant selon les revendications 1 à 3, **caractérisé en ce que** la partie fixée de manière rigide (4) est divisée au moins en deux sections électriques séparées.

5. Un actionneur auto-détectant selon la revendication 1, **caractérisé en ce que** la partie mobile (5) est divisée en au moins deux sections, partiellement séparées par une zone non-conductrice (13).

6. Un actionneur auto-détectant selon les revendications 1, 2 et 5, **caractérisé en ce que** à la fois la partie mobile et la partie fixée de manière rigide sont séparées en au moins deux sections, partiellement séparées par une zone non-conductrice (12, 13).

7. Un actionneur auto-détectant selon les revendications 1 à 6, **caractérisé en ce que** ledit matériau polymère électroactif est un matériau composite polymère ionique-métal.

8. Une méthode pour contrôler la forme d'un actionneur, comprenant un matériau polymère électroactif, la méthode comprenant l'application d'une impulsion de tension de contrôle au dit actionneur, **caractérisée par** la fixation rigide d'au moins une partie de l'actionneur et par la mesure d'un premier signal de réponse à ladite impulsion de tension à une partie fixée de manière rigide de l'actionneur et la mesure d'un second signal de réponse à ladite impulsion de tension à une partie mobile de l'actionneur, et la calcul de la forme de la partie mobile par la différence entre le premier signal de réponse et le second signal de réponse.
